# EUROPEAN PATENT APPLICATION

(11) **EP 4 653 215 A1**
(43) Date of publication of application: **26.11.2025**
(21) Application number: 24177606.1
(22) Date of filing: 23.05.2024
(51) Int. Cl.: B60K 1/04

(54) **A BATTERY PACK MOUNTING ASSEMBLY, A BATTERY PACK ASSEMBLY, A VEHICLE AND A METHOD**

(71) Applicant: VOLVO TRUCK CORPORATION, 405 08 Göteborg (SE)
(72) Inventor: Jonsson, Kasper, 417 57 Göteborg (SE); Rout, Dhirendra, 422 54 Göteborg (SE); Guidez, Louis, 421 53 Västra Frölunda (SE); Irannezhad, Mike, 413 30 Göteborg (SE); Freitas, Daniel, 417 39 Göteborg (SE)
(74) Representative: Kransell & Wennborg KB

(57) **Abstract**

The disclosure relates to a battery pack mounting assembly (1) comprising an upper platform support plate (2) and a lower platform support plate (3), wherein the lower platform support plate (3) is provided below the upper platform support plate (2), as seen in a height direction (H), such that a first space (S1) for at least one battery pack (110) is formed therebetween. The disclosure also relates to a battery pack assembly (100), a vehicle (200), and to a method for mounting a battery pack assembly (100) to a vehicle (200).

## Description

### TECHNICAL FIELD

The disclosure relates generally to energy storage systems for vehicles. In particular aspects, the disclosure relates to a battery pack mounting assembly for a vehicle, a battery pack assembly, a vehicle, and a method for mounting a battery pack assembly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electrically powered vehicle may comprise an energy storage system for storing electrical energy. The energy storage system is typically in the form of one or more battery packs comprising a plurality of electrochemical cells. The electrochemical cells may be lithium-ion cells or any other type of cell for storing electrical energy.

There is a strive to improve packaging and mounting of battery packs to a vehicle, such as providing a more cost-effective, reliable and/or robust packaging and/or mounting of the battery packs to the vehicle.

### SUMMARY

According to a first aspect of the disclosure, a battery pack mounting assembly for a vehicle is provided. The battery pack mounting assembly has a longitudinal extension along a longitudinal direction, a width extension along a width direction and a height extension along a height direction. The battery pack mounting assembly comprises:
- an upper platform support plate,
- a lower platform support plate,

wherein the lower platform support plate is provided below the upper platform support plate, as seen in the height direction, such that a first space for at least one battery pack is formed therebetween,
   - at least one first fixation bracket, provided above the upper platform support plate, as seen in the height direction, and extending outwardly in the width direction from a first beam member fixation point to a first crash protection fixation point at a first outer lateral end such that a second space for at least one battery pack is formed between the upper platform support plate and the at least one first fixation bracket,
   - at least one second fixation bracket, provided above the upper platform support plate, as seen in the height direction, and extending outwardly in the width direction from a second beam member fixation point to a second crash protection fixation point at a second outer lateral end such that a third space for at least one battery pack is formed between the upper platform support plate and the at least one second fixation bracket,
wherein the first and second beam member fixation points are offset from each other in the width direction such that a fourth space is provided in-between the second and third spaces, as seen in the width direction, and above the first space, as seen in the height direction,
   - a first crash protection member, provided at the first outer lateral end, as seen in the width direction,
   - a second crash protection member, provided at the second outer lateral end, as seen in the width direction,
wherein the first crash protection member is attached to the at least one first fixation bracket via the first crash protection fixation point, to the upper platform support plate and to the lower platform support plate, and/or wherein the second crash protection member is attached to the at least one second fixation bracket via the second crash protection fixation point, to the upper platform support plate and to the lower platform support plate. The first aspect of the disclosure may seek to provide an improved battery pack mounting assembly for a vehicle which is cost-effective, reliable and/or robust. A technical benefit may include that battery packs may be packaged and mounted to a vehicle in a compact manner by using relatively few parts for carrying the battery packs. This configuration may also result in a high energy density, i.e., a large number of electrochemical cells may be allowed to be packaged close to each other.

Optionally in some examples, including in at least one preferred example, the battery pack mounting assembly is configured such that a load exerted on the lower platform support plate is transferable to the upper platform support plate and/or to the at least one first and second fixation brackets via the first and second crash protection members. A technical benefit may include that by transferring loads via the first and/or second crash protection member, fewer structural parts may be required. This in turn may result in reduced weight and a more cost-effective configuration of the battery pack mounting assembly.

Optionally in some examples, including in at least one preferred example, the battery pack mounting assembly is configured such that a load exerted on the upper platform support plate is transferable to the at least one first and second fixation brackets via the first and second crash protection members. A technical benefit may include that by transferring loads via the first and/or second crash protection member, fewer structural parts may be required in the battery pack mounting assembly. This in turn may result in reduced weight and a more cost-effective configuration of the battery pack mounting assembly.

Optionally in some examples, including in at least one preferred example, the battery pack mounting assembly further comprises:
- at least one first attachment element provided in the second space, wherein the at least one first attachment element is attached to the upper platform support plate and arranged to be attachable to a first longitudinally extending beam member of the vehicle in the fourth space, and/or
- at least one second attachment element provided in the third space, wherein the at least one second attachment element is attached to the upper platform support plate and arranged to be attachable to a second longitudinally extending beam member of the vehicle in the fourth space. A technical benefit may include that loads may additionally or alternatively be transferred from the upper platform support plate to the first/second longitudinally extending beam member(s) in an efficient manner, e.g., such that fewer structural parts may be required in the battery pack mounting assembly. This in turn may result in reduced weight and a more cost-effective configuration of the battery pack mounting assembly.

Optionally in some examples, including in at least one preferred example, the battery pack mounting assembly comprises a plurality of first fixation brackets, distributed offset from each other in the longitudinal direction, and/or comprises a plurality of second fixation brackets, distributed offset from each other in the longitudinal direction. A technical benefit may include that a robust battery pack mounting assembly is achieved without adding unnecessary weight to the vehicle.

Optionally in some examples, including in at least one preferred example, the first crash protection member is attached to the at least one first fixation bracket by at least one first fastener, wherein the at least one first fastener has a longitudinal extension along a first fastener axis which extends along the width direction or the height direction, and/or the second crash protection member is attached to the at least one second fixation bracket by at least one second fastener, wherein the at least one second fastener has a longitudinal extension along a second fastener axis which extends along the width direction or the height direction. A technical benefit may include that a facilitated assembly procedure of the battery pack mounting assembly is achieved. For example, by said longitudinal extension(s), it may be easier for a user and/or an assembly robot to attach the at least one first/second fastener.

Optionally in some examples, including in at least one preferred example, the first crash protection member comprises an indentation at a position below the first crash protection fixation point of the at least one first fixation bracket, as seen in the height direction, such that the at least one first fastener is insertable/removable to/from the first crash protection fixation point in the height direction, and/or
the second crash protection member comprises an indentation at a position below the second crash protection fixation point of the at least one second fixation bracket, as seen in the height direction, such that the at least one second fastener is insertable/removable to/from the second crash protection fixation point in the height direction. A technical benefit may include that a space-efficient configuration of the battery pack mounting assembly is achieved, e.g., enabling the at least one first/second fastener to not extend outside the first/second outer lateral end(s).

According to a second aspect of the disclosure, a battery pack assembly is provided. The battery pack assembly comprises a battery pack mounting assembly according to any one of the examples of the first aspect of the disclosure, and further comprises at least one first battery pack located in the first space, at least one second battery pack located in the second space, and/or at least one third battery pack located in the third space. The second aspect of the disclosure may seek to provide an improved battery pack assembly for a vehicle which is cost-effective, reliable and/or robust. A technical benefit may include that the battery packs may be packaged and mounted to a vehicle in a compact manner by using relatively few parts for carrying the battery packs. This configuration may also result in a high energy density, i.e., a large number of electrochemical cells may be allowed to be packaged close to each other. Advantages and technical benefits of the second aspect of the disclosure are analogous to the advantages and technical benefits of the first aspect of the disclosure.

Optionally in some examples, including in at least one preferred example, the at least one first battery pack, the at least one second battery pack, and/or the at least one third battery pack comprises a plurality of electrochemical battery cells which are stacked one after the other in the longitudinal direction or in the width direction. A technical benefit may include that a compact configuration of the battery pack assembly is achieved, allowing a large number of battery cells to be packaged close to each other.

Optionally in some examples, including in at least one preferred example, the at least one first battery pack comprises at least one first crossbeam member with an extension in the width direction, wherein the at least one first crossbeam member is attached to the upper platform support plate by one or more third fasteners. The one or more third fasteners may herein also be denoted as one or more crossbeam member fasteners. A technical benefit may include that a robust configuration of the battery pack assembly is achieved in which the at least one first crossbeam member is a structural member which is arranged to transfer loads between the lower and the upper platform support plates. This also implies that fewer structural parts may be used for providing a robust configuration of the battery pack assembly.

Optionally in some examples, including in at least one preferred example, the at least one first crossbeam member is attached to a first bottom support plate of the at least one first battery pack and the at least one first bottom support plate is attached to the lower platform support plate by one or more fourth fasteners. The one or more fourth fasteners may herein also be denoted as one or more bottom support plate fasteners. A technical benefit may include that a robust configuration of the battery pack assembly is achieved in which the at least one first crossbeam member is a structural member which is arranged to transfer loads between the lower and the upper platform support plates via the first bottom support plate of the at least one first crossbeam member. This also implies that the at least one first battery pack is used for providing structural rigidity to the battery pack assembly, e.g., thereby requiring fewer structural parts.

Optionally in some examples, including in at least one preferred example, the battery pack assembly further comprises at least one longitudinally extending lower beam member which is located in the first space and attached to the lower platform support plate and the upper platform support plate, and preferably located midway between the first and second outer lateral ends. A technical benefit may include that the at least one longitudinally extending lower beam member provides increased structural rigidity to the battery pack assembly in a space-efficient manner.

According to a third aspect of the disclosure, a vehicle is provided. The vehicle comprises a vehicle frame which extends along a longitudinal direction of the vehicle, wherein the vehicle frame comprises:
- a first and a second longitudinally extending beam member which are offset from each other in a transverse direction of the vehicle and which extend in the longitudinal direction between a front portion and a rear portion of the vehicle, and
- a battery pack assembly according to any one of the examples of the second aspect of the disclosure, wherein the longitudinal direction of the battery pack assembly and the battery pack mounting assembly corresponds to the longitudinal direction of the vehicle, and wherein the at least one first fixation bracket is attached to the first longitudinally extending beam member via the first beam member fixation point and the at least one second fixation bracket is attached to the second longitudinally extending beam member via the second beam member fixation point. Advantages and technical benefits of the third aspect of the disclosure are analogous to the advantages and technical benefits of the first and second aspects of the disclosure.

Optionally in some examples, including in at least one preferred example, the battery pack mounting assembly comprises at least one first attachment element and/or at least one second attachment element as disclosed herein, and
wherein the at least one first attachment element is attached to the first longitudinally extending beam member and/or wherein the at least one second attachment element is attached to the second longitudinally extending beam member.

Optionally in some examples, including in at least one preferred example, the battery pack assembly is arranged to the vehicle such that there is a gap between the upper platform support plate and a respective lower end of the first and second longitudinally extending beam members, as seen in the height direction. A technical benefit may include that more predicted and preferred load transfer paths are achieved in the vehicle. This may also imply a facilitated attachment procedure of the battery pack assembly to the first and second longitudinally extending beam members.

According to a fourth aspect of the disclosure, a method for mounting a battery pack assembly according to the second aspect of the disclosure to a vehicle is provided. The vehicle comprises a vehicle frame which extends along a longitudinal direction of the vehicle, wherein the vehicle frame comprises:
- a first and a second longitudinally extending beam member which are offset from each other in a transverse direction of the vehicle and which extend in the longitudinal direction between a front portion and a rear portion of the vehicle, the method comprising:
- attaching the battery pack assembly to the first and second longitudinally extending beam members. The fourth aspect of the disclosure may seek to provide an improved method for mounting a battery pack assembly to a vehicle, wherein the battery pack assembly is cost-effective, reliable and/or robust. Advantages and technical benefits of the fourth aspect of the disclosure are analogous to the advantages and technical benefits of the first, second and third aspects of the disclosure.

Optionally in some examples, including in at least one preferred example, attaching the battery pack assembly to the first and second longitudinally extending beam members comprises:
- attaching the at least one first fixation bracket to the first longitudinally extending beam member and the at least one second fixation bracket to the second longitudinally extending beam member,
- obtaining a pre-assembled object comprising the upper platform support plate, the lower platform support plate and the at least one first battery pack, wherein the upper platform support plate of the pre-assembled object is attached to the lower platform support plate via the at least one first battery pack,
- attaching the pre-assembled object to the vehicle, such as by the at least one first and/or second attachment element as disclosed herein. A technical benefit may include that a fast, reliable, and more cost-effective procedure for attaching the battery pack assembly is achieved. For example, this procedure may provide more cost-effective mass production of electric vehicles.

Optionally in some examples, including in at least one preferred example, the method further comprises:
- inserting the at least one second battery pack into the second space,
- inserting the at least one third battery pack into the third space. A technical benefit may include that the pre-assembled object will be lighter when it is attached to the vehicle if the at least one second/third battery pack is/are inserted after the pre-assembled object has been attached to the vehicle.

Optionally in some examples, including in at least one preferred example, the method further comprises:
- inserting at least one additional first battery pack into the first space. A technical benefit may include that the pre-assembled object will be lighter when it is attached to the vehicle if the at least one additional first battery pack is/are inserted after the pre-assembled object has been attached to the vehicle.

Optionally in some examples, including in at least one preferred example, the method further comprises:
- attaching the first crash protection member to the at least one first fixation bracket via the first crash protection fixation point, to the upper platform support plate and to the lower platform support plate, and/or attaching the second crash protection member to the at least one second fixation bracket via the second crash protection fixation point, to the upper platform support plate and to the lower platform support plate. For example, the first and/or second crash protection members may be attached after at least some or all of the battery packs have been provided in the battery pack mounting assembly.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary battery pack mounting assembly in a perspective view according to an example.
**FIG. 3** is an exemplary battery pack assembly in a perspective view according to an example.
**FIG. 4** are exemplary battery pack assemblies in respective sectional views according to examples.
**FIG. 5** is an exemplary battery pack assembly in a side view according to an example.
**FIG. 6** is an exemplary battery pack in a perspective view according to an example.
**FIG. 7** is an exemplary pre-assembled object in a perspective view according to an example.
**FIGS. 8a****-d** are a method for mounting a battery pack assembly according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide more cost-effective, reliable and/or robust packaging and/or mounting of battery packs to a vehicle. For example, for larger vehicles there may be a need to mount battery packs on top of each other since a large number of electrochemical battery cells are required for powering the vehicle. Hence, there is a need to package battery cells in a compact manner in a cost-effective, reliable and/or robust manner. Additionally, or alternatively, an aim of the present disclosure is to provide a battery pack mounting assembly, a battery pack, a vehicle, and/or a method, which at least partially alleviate one or more drawbacks of the prior art, or which at least provide suitable alternatives.

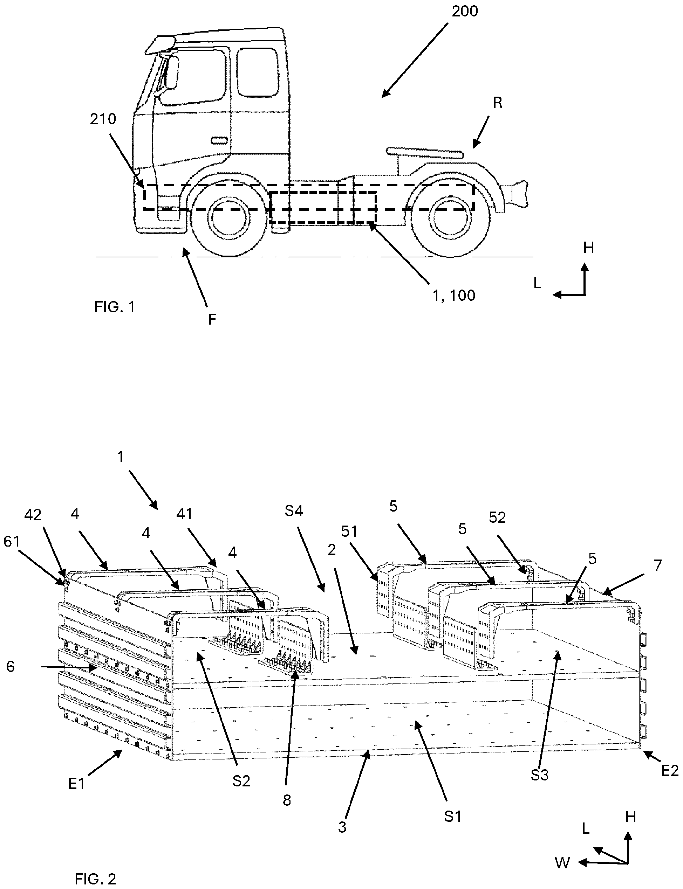

**FIG. 1** is an exemplary vehicle 200 in a side view according to an example. The vehicle 200 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 200 may be driven by a user (not shown) and/or be at least partly automatically driven, i.e., it may be a vehicle comprising autonomous driving capabilities. The vehicle 200 may be a fully electric vehicle or a hybrid vehicle. As such, the vehicle 200 may comprise one or more electric motors/generators and/or an internal combustion engine (not shown) for driving the vehicle 200. The vehicle 200 comprises a battery pack mounting assembly 1 and a battery pack assembly 100 according to examples disclosed herein. The vehicle 200 has a longitudinal direction L which corresponds to a travel direction of the vehicle 200. The vehicle 200 comprises a vehicle frame 210 which will be further described in the below.

**FIG. 2** is an exemplary battery pack mounting assembly 1 in a perspective view according to an example. For example, the battery pack mounting assembly 1 in Fig. 2 may be the battery pack mounting assembly 1 depicted in FIG. 1.

The battery pack mounting assembly 1 has a longitudinal extension along a longitudinal direction L, a width extension along a width direction W and a height extension along a height direction H. The directions are perpendicular to each other and may correspond to the corresponding directions of the vehicle 200 when the battery pack mounting assembly 1 is mounted to the vehicle 200.

The battery pack mounting assembly 1 comprises an upper platform support plate 2 and a lower platform support plate 3. As shown, any one of the upper/lower platform support plates 2, 3 may be arranged substantially perpendicular to the height direction H such that a planar support surface for battery packs is provided. For example, any one of the upper/lower platform support plates 2, 3 may be made of metal, such as sheet metal, and/or by any other material which provides structural rigidity.

The lower platform support plate 3 is provided below the upper platform support plate 2, as seen in the height direction H, such that a first space S1 for at least one battery pack 110 (not shown) is formed therebetween.

The battery pack mounting assembly 1 further comprises at least one first fixation bracket 4, provided above the upper platform support plate 2, as seen in the height direction H, and extending outwardly in the width direction W from a first beam member fixation point 41 to a first crash protection fixation point 42 at a first outer lateral end E1 such that a second space S2 for at least one battery pack 120 (not shown) is formed between the upper platform support plate 2 and the at least one first fixation bracket 4.

The battery pack mounting assembly 1 further comprises at least one second fixation bracket 5, provided above the upper platform support plate 2, as seen in the height direction H, and extending outwardly in the width direction W from a second beam member fixation point 51 to a second crash protection fixation point 52 at a second outer lateral end E2, i.e. on an opposite side to the first outer lateral end E1, such that a third space S3 for at least one battery pack 130 (not shown) is formed between the upper platform support plate 2 and the at least one second fixation bracket 5.

The first and second beam member fixation points 41, 51 are offset from each other in the width direction W such that a fourth space S4 is provided in-between the second and third spaces S2, S3, as seen in the width direction W, and above the first space S1, as seen in the height direction H.

The battery pack mounting assembly 1 further comprises a first crash protection member 6, provided at the first outer lateral end E1, as seen in the width direction W, and a second crash protection member 7, provided at the second outer lateral end E2, as seen in the width direction W.

The first crash protection member 6 is attached to the at least one first fixation bracket 4 via the first crash protection fixation point 42, to the upper platform support plate 2 and to the lower platform support plate 3. Additionally, or alternatively, as shown in FIG. 2, the second crash protection member 7 is attached to the at least one second fixation bracket 5 via the second crash protection fixation point 52, to the upper platform support plate 2 and to the lower platform support plate 3.

As shown in e.g. FIG. 2, the battery pack mounting assembly 1 may be configured such that a load exerted on the lower platform support plate 3 is transferable to the upper platform support plate 2 and/or to the at least one first and second fixation brackets 4, 5 via the first and second crash protection members 6, 7. Accordingly, preferably, the first and second crash protection members 6, 7 are made of a structurally rigid material, such as metal, e.g. sheet metal. The exerted load is typically a load caused by a battery pack 110 when it is provided in the first space S 1. The first and/or second crash protection members 6, 7 are/is additionally or alternatively arranged to withstand a side impact force of a predetermined magnitude. The first and/or second crash protection members 6, 7 may be arranged to cover and protect battery packs provided in the battery pack mounting assembly 1.

Additionally, or alternatively, the battery pack mounting assembly 1 may as shown in e.g. FIG. 2 be configured such that a load exerted on the upper platform support plate 2 is transferable to the at least one first and second fixation brackets 4, 5 via the first and second crash protection members 6, 7. The exerted load is typically a load caused by a battery pack 120, 130 when it is provided in the second and/or third space S2, S3.

With reference to e.g. FIG. 2, the battery pack mounting assembly 1 may further comprise a plurality of first fixation brackets 4, distributed offset from each other in the longitudinal direction L, and/or a plurality of second fixation brackets 5, distributed offset from each other in the longitudinal direction L. In the shown example, the plurality of fixation brackets 4, 5, are formed as arm members with a respective extension in the width direction W. Furthermore, in the shown example, there are three fixation brackets 4, 5 on each lateral side of the battery pack mounting assembly 1.

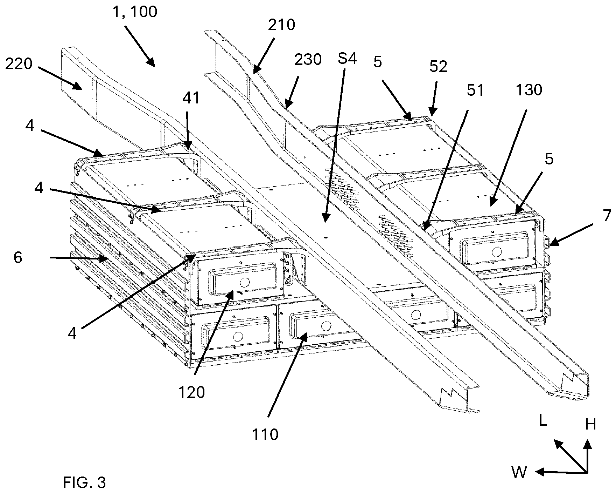

**FIG. 3** is an exemplary battery pack assembly 100 according to an example. The battery pack assembly 100 may for example comprise the battery pack mounting assembly 1 as shown in FIG. 2, and may also be part of the vehicle 200 as shown in FIG. 1.

The battery pack assembly 100 further comprises at least one first battery pack 110 located in the first space S1, at least one second battery pack 120 located in the second space S2, and/or at least one third battery pack 130 located in the third space S3.

As shown in FIG. 3, the battery pack assembly 100 is arranged to be attached to a vehicle frame 210 which extends along a longitudinal direction L of the vehicle 200, as e.g. shown in FIG. 1. The vehicle frame 210 comprises a first and a second longitudinally extending beam member 220, 230 which are offset from each other in a transverse direction W of the vehicle 200 and which extend in the longitudinal direction L between a front portion F and a rear portion R of the vehicle 200. The longitudinal direction L of the battery pack assembly 100 and the battery pack mounting assembly 1 corresponds to the longitudinal direction L of the vehicle 200.

In the shown example, the at least one first fixation bracket 4 is attached to the first longitudinally extending beam member 220 via the first beam member fixation point 41 and the at least one second fixation bracket 5 is attached to the second longitudinally extending beam member 230 via the second beam member fixation point 51.

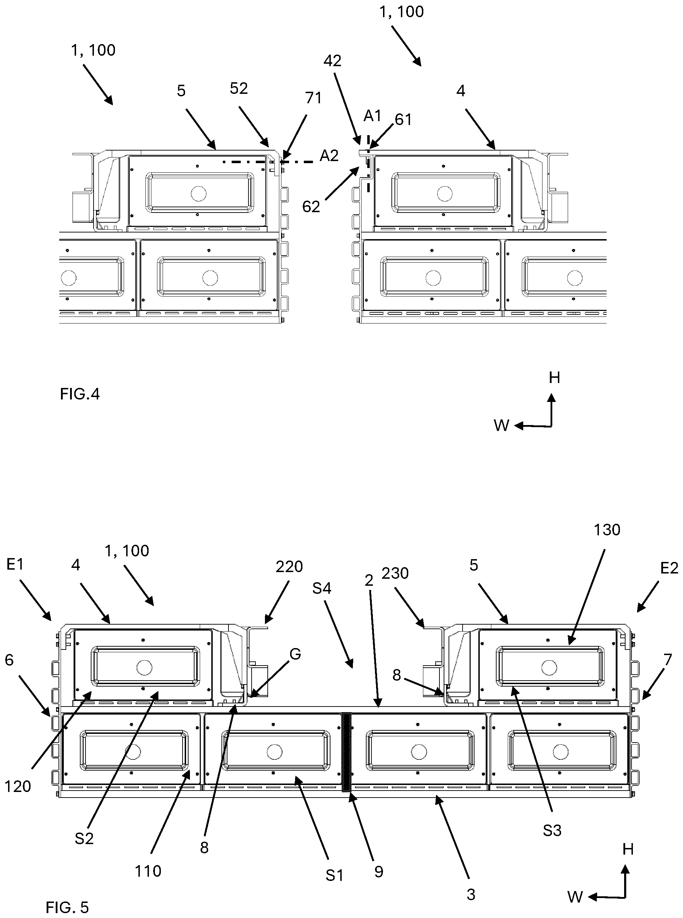

**FIG. 4** are exemplary battery pack assemblies 100 and battery pack mounting assemblies 1 according to examples. More specifically, to the left a first example is shown and to the right a second alternative example is shown. The first crash protection member 6 may be attached to the at least one first fixation bracket 4 by at least one first fastener 61, wherein the at least one first fastener 61 has a longitudinal extension along a first fastener axis A1 which extends along the height direction H. In an alternative example not shown, the first fastener axis may extend along the width direction W. The second crash protection member 7 may be attached to the at least one second fixation bracket 5 by at least one second fastener 71, wherein the at least one second fastener 71 has a longitudinal extension along a second fastener axis A2 which extends along the width direction W. In an alternative example not shown, the second fastener axis may extend along the height direction W.

The first crash protection member 6 may comprise an indentation 62 at a position below the first crash protection fixation point 42 of the at least one first fixation bracket 4, as seen in the height direction H, such that the at least one first fastener 61 is insertable/removable to/from the first crash protection fixation point 42 in the height direction H. As shown, the at least one first fastener 61 may be accessible from the outside, i.e. the indentation 62 is provided on the outside of the first crash protection member 6. In a similar configuration not shown, the second crash protection member 5 may comprise an indentation at a position below the second crash protection fixation point 52 of the at least one second fixation bracket 5, as seen in the height direction H, such that the at least one second fastener is insertable/removable to/from the second crash protection fixation point 52 in the height direction H. The indentation 62 as disclosed herein may also be denoted a recess, and/or it may have an extension along the longitudinal direction L.

**FIG 5** depicts a battery pack assembly 100 and a battery pack mounting assembly 1 in a side view according to an example. For example, the battery pack assembly 100 and the battery pack mounting assembly 1 in FIG. 5 may be the battery pack assembly 100 and the battery pack mounting assembly 1 as shown in FIGS. 2-4. With reference to e.g. FIGS. 2 and 5, the battery pack mounting assembly 1 may further comprise at least one first attachment element 8 provided in the second space S2, wherein the at least one first attachment element 8 is attached to the upper platform support plate 2 and arranged to be attachable to a first longitudinally extending beam member 220 of the vehicle 200 in the fourth space S4. Additionally, or alternatively, the battery pack mounting assembly 1 may further comprise at least one second attachment element 8 provided in the third space S3, wherein the at least one second attachment element 8 is attached to the upper platform support plate 2 and arranged to be attachable to a second longitudinally extending beam member 230 of the vehicle 200 in the fourth space S4. The at least one first/second attachment element 8 may be L-shaped, as seen in a sectional plane which is perpendicular to the longitudinal direction L. Preferably, the at least one first/second attachment element 8 may be formed by a structurally rigid material, such as metal.

In the example shown in FIG. 5, the at least one first attachment element 8 is attached to the first longitudinally extending beam member 220 and the at least one second attachment element 8 is attached to the second longitudinally extending beam member 230.

As further shown, the battery pack assembly 100 may be arranged to the vehicle 200 such that there is a gap G between the upper platform support plate 2 and a respective lower end of the first and second longitudinally extending beam members 220, 230, as seen in the height direction H.

As further shown in FIG. 5, the battery pack assembly 100 may further comprise at least one longitudinally extending lower beam member 9 which is located in the first space S1 and attached to the lower platform support plate 3 and the upper platform support plate 2, and preferably located midway between the first and second outer lateral ends E1, E2.

With reference to e.g. FIGS. 3 and 5, the least one second battery pack 120 is preferably attached to the at least one first fixation bracket 4, such as by one or more fasteners, and/or the at least one third battery pack 130 is preferably attached to the at least one second fixation bracket 5, such as by one or more fasteners. A respective bottom support plate of the at least one second and/or third battery pack 120, 130, may be attached to the upper platform support plate 2 by one or more fasteners.

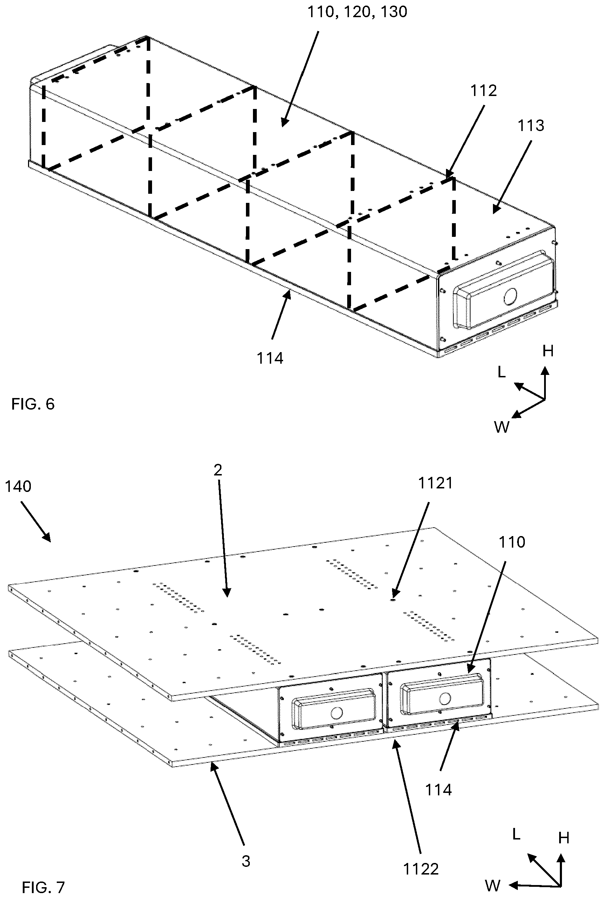

**FIG. 6** is an exemplary battery pack 110, 120, 130 in a perspective view according to an example. The battery pack 110, 120, 130 may be a battery pack for the battery pack assembly 100 as e.g. shown in FIG. 5. In the shown example, the battery pack 110, 120, 130 is box-shaped. The battery packs 110, 120, 130 of the battery pack assembly 100 preferably have similar or identical outer profile shapes. The at least one first battery pack 110, the at least one second battery pack 120, and/or the at least one third battery pack 130 comprises a plurality of electrochemical battery cells (not shown) which may be stacked one after the other in the longitudinal direction L or in the width direction W. Preferably, the plurality of electrochemical battery cells are prismatic cells. The prismatic cells are preferably stacked in the longitudinal direction L. Hence, the outer profile of the battery pack 110, 120, 130, may correspond to the outer profile of the stack of prismatic battery cells. The plurality of electrochemical battery cells may be stacked one after the other in the longitudinal direction L in one row or in two or more parallel rows. Alternatively, the plurality of electrochemical battery cells may be stacked one after the other in the width direction W in one row or in two or more parallel rows. As shown, the battery packs 110, 120, 130 as disclosed herein may comprise a cover 113 for covering the battery cells. The cover 113 may as shown have a U-shaped cross-sectional profile.

As shown in FIG. 6, the at least one first battery pack 110 may comprise at least one first crossbeam member 112 with an extension in the width direction W, wherein the at least one first crossbeam member 112 may be attached to the upper platform support plate 2 by one or more third fasteners 1121 (see FIG. 7). The at least one first crossbeam member 112 may as further shown be attached to a first bottom support plate 114 of the at least one first battery pack 110 and the at least one first bottom support plate 114 may be attached to the lower platform support plate 3 by one or more fourth fasteners 1122 (see FIG. 7). The at least one second and/or third battery pack 120, 130 may have a similar configuration with one or more crossbeam members, which may be used for fixing the battery pack 120, 130 to the fixation bracket(s) 4, 5, and/or to the upper platform support plate 2, e.g., by use of one or more fasteners.

**FIG. 7** is an exemplary pre-assembled object 140 in a perspective view of a battery pack assembly 100 as disclosed herein. The pre-assembled object 140 may comprise the upper platform support plate 2, the lower platform support plate 3 and the at least one first battery pack 110, wherein the upper platform support plate 2 of the pre-assembled object 140 is attached to the lower platform support plate 2 via the at least one first battery pack 110. In the shown example, the pre-assembled object 140 comprises two first battery packs 110.

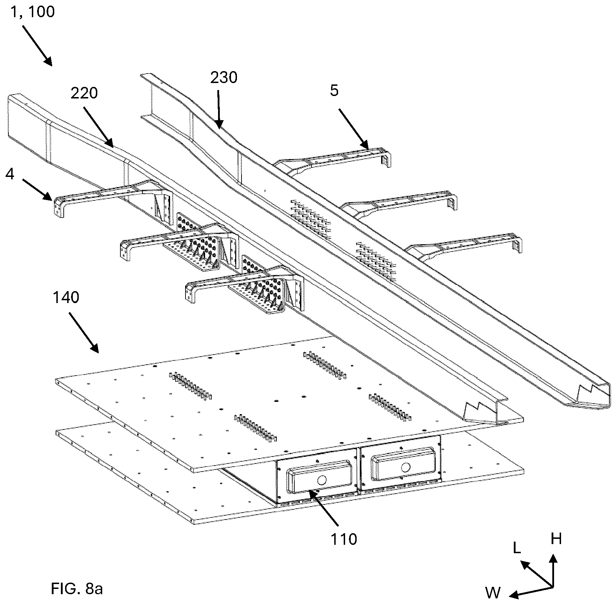

**FIGS. 8a****-d** depict a method for mounting a battery pack assembly 100 to a vehicle 200. The method comprises attaching the battery pack assembly 100 to the first and second longitudinally extending beam members 220, 230.

Attaching the battery pack assembly 100 to the first and second longitudinally extending beam members 220, 230 may comprise attaching the at least one first fixation bracket 4 to the first longitudinally extending beam member 220 and the at least one second fixation bracket 5 to the second longitudinally extending beam member 230.

With reference to e.g. FIG. 8a, the method may further comprise, optionally after the at least one first/second fixation brackets 4, 5 have been attached, obtaining the preassembled object 140 and attaching the preassembled object 140 to the vehicle 200, such as by the at least one first and/or second attachment element 8.

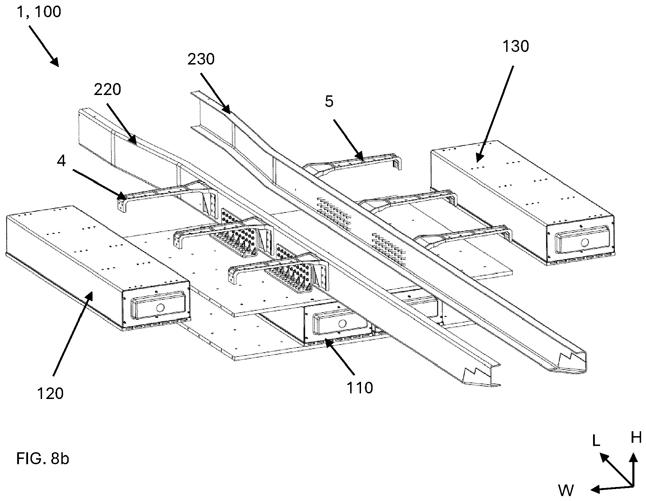

With reference to FIG. 8b, the method may further comprise, optionally after the pre-assembled object 140 has been attached, inserting at least one additional first battery pack 110 into the first space S 1. In the shown example, one additional first battery pack 110 is inserted from the first outer lateral end E1 and another additional first battery pack 110 is inserted from the second outer lateral end E2.

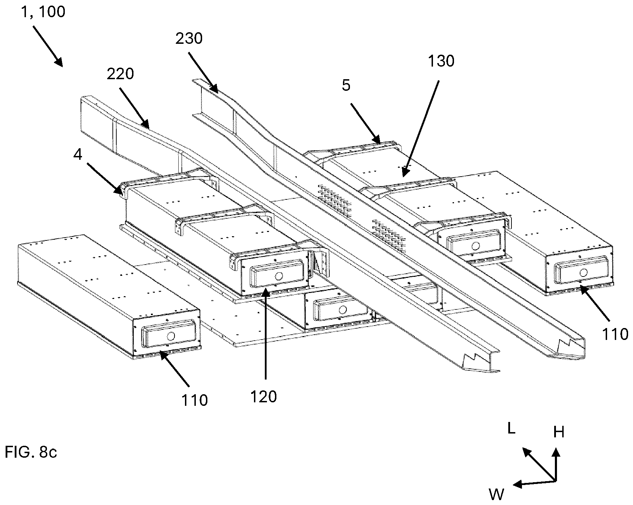

With reference to FIG. 8c, the method may further comprise, optionally after the pre-assembled object 140 has been attached, inserting the at least one second battery pack 120 into the second space S2, and/or inserting the at least one third battery pack 130 into the third space S3. For example, the at least one second/third battery pack 120, 130 is inserted in a direction along the width direction W, i.e., from the first/second outer lateral ends E1, E2.

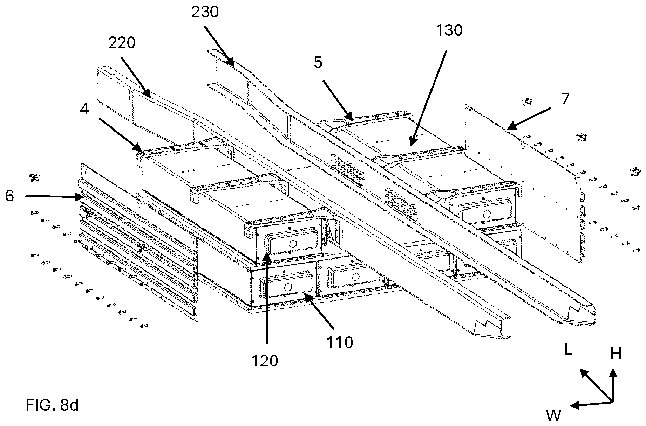

With reference to FIG. 8d, the method may further comprise, optionally after the battery packs 110, 120, 130, such as all of the battery packs, have been inserted, attaching the first crash protection member 6 to the at least one first fixation bracket 4 via the first crash protection fixation point 42, to the upper platform support plate 2 and to the lower platform support plate 3, and/or attaching the second crash protection member 7 to the at least one second fixation bracket 5 via the second crash protection fixation point 52, to the upper platform support plate 2 and to the lower platform support plate 3. The attachment may be performed by use of one or more fasteners, which as shown may have a longitudinal extension in the width direction W. The fasteners as disclosed herein may be any type of mechanical fastener, such as a screw, rivet, bolt, or the like. In total, as shown in e.g. FIG. 8d, there may be eight battery packs arranged in the proximity of the first and second longitudinally extending beam members 220, 230. However, it shall be noted that more or fewer battery packs may also be used. In the examples disclosed herein, the battery packs may be arranged in the proximity of the first and second longitudinally extending beam members 220, 230 and such that they are provided below and on the outer lateral sides with respect to the first and second longitudinally extending beam members 220, 230.

In the below, possible features and feature combinations of the present disclosure are presented as a list of Examples.

Example 1: A battery pack mounting assembly (1) for a vehicle (200), the battery pack mounting assembly (1) having a longitudinal extension along a longitudinal direction (L), a width extension along a width direction (W) and a height extension along a height direction (H), the battery pack mounting assembly (1) comprising:
- an upper platform support plate (2),
- a lower platform support plate (3),

wherein the lower platform support plate (3) is provided below the upper platform support plate (2), as seen in the height direction (H), such that a first space (S 1) for at least one battery pack (110) is formed therebetween,
   - at least one first fixation bracket (4), provided above the upper platform support plate (2), as seen in the height direction (H), and extending outwardly in the width direction (W) from a first beam member fixation point (41) to a first crash protection fixation point (42) at a first outer lateral end (E1) such that a second space (S2) for at least one battery pack (120) is formed between the upper platform support plate (2) and the at least one first fixation bracket (4),
   - at least one second fixation bracket (5), provided above the upper platform support plate (2), as seen in the height direction (H), and extending outwardly in the width direction (W) from a second beam member fixation point (51) to a second crash protection fixation point (52) at a second outer lateral end (E2) such that a third space (S3) for at least one battery pack (130) is formed between the upper platform support plate (2) and the at least one second fixation bracket (5),
wherein the first and second beam member fixation points (41, 51) are offset from each other in the width direction (W) such that a fourth space (S4) is provided in-between the second and third spaces (S2, S3), as seen in the width direction (W), and above the first space (S1), as seen in the height direction (H),
   - a first crash protection member (6), provided at the first outer lateral end (E1), as seen in the width direction (W),
   - a second crash protection member (7), provided at the second outer lateral end (E2), as seen in the width direction (W),
wherein the first crash protection member (6) is attached to the at least one first fixation bracket (4) via the first crash protection fixation point (42), to the upper platform support plate (2) and to the lower platform support plate (3), and/or wherein the second crash protection member (7) is attached to the at least one second fixation bracket (5) via the second crash protection fixation point (52), to the upper platform support plate (2) and to the lower platform support plate (3).

Example 2: The battery pack mounting assembly (1) according to Example 1, wherein the battery pack mounting assembly (1) is configured such that a load exerted on the lower platform support plate (3) is transferable to the upper platform support plate (2) and/or to the at least one first and second fixation brackets (4, 5) via the first and second crash protection members (6, 7).

Example 3: The battery pack mounting assembly (1) according to any one of the preceding Examples, wherein the battery pack mounting assembly (1) is configured such that a load exerted on the upper platform support plate (2) is transferable to the at least one first and second fixation brackets (4, 5) via the first and second crash protection members (6, 7).

Example 4: The battery pack mounting assembly (1) according to any one of the preceding Examples, further comprising:
- at least one first attachment element (8) provided in the second space (S2), wherein the at least one first attachment element (8) is attached to the upper platform support plate (2) and arranged to be attachable to a first longitudinally extending beam member (220) of the vehicle (200) in the fourth space (S4), and/or
- at least one second attachment element (8) provided in the third space (S3), wherein the at least one second attachment element (8) is attached to the upper platform support plate (2) and arranged to be attachable to a second longitudinally extending beam member (230) of the vehicle (200) in the fourth space (S4).

Example 5: The battery pack mounting assembly (1) according to any one of the preceding Examples, comprising a plurality of first fixation brackets (4), distributed offset from each other in the longitudinal direction (L), and/or comprising a plurality of second fixation brackets (5), distributed offset from each other in the longitudinal direction (L).

Example 6: The battery pack mounting assembly (1) according to any one of the preceding Examples, wherein the first crash protection member (6) is attached to the at least one first fixation bracket (4) by at least one first fastener (61), wherein the at least one first fastener (61) has a longitudinal extension along a first fastener axis (A1) which extends along the width direction (W) or the height direction (H), and/or
wherein the second crash protection member (7) is attached to the at least one second fixation bracket (5) by at least one second fastener (71), wherein the at least one second fastener (71) has a longitudinal extension along a second fastener axis (A2) which extends along the width direction (W) or the height direction (H).

Example 7: The battery pack mounting assembly (1) according to Example 6, wherein the first crash protection member (6) comprises an indentation (62) at a position below the first crash protection fixation point (42) of the at least one first fixation bracket (4), as seen in the height direction (H), such that the at least one first fastener (61) is insertable/removable to/from the first crash protection fixation point (42) in the height direction (H), and/or
wherein the second crash protection member (5) comprises an indentation at a position below the second crash protection fixation point (52) of the at least one second fixation bracket (5), as seen in the height direction (H), such that the at least one second fastener is insertable/removable to/from the second crash protection fixation point (52) in the height direction (H).

Example 8: A battery pack assembly (100) comprising a battery pack mounting assembly (1) according to any one of the preceding Examples, and further comprising at least one first battery pack (110) located in the first space (S1), at least one second battery pack (120) located in the second space (S2), and/or at least one third battery pack (130) located in the third space (S3).

Example 9: The battery pack assembly (100) according to Example 8, wherein the at least one first battery pack (110), the at least one second battery pack (120), and/or the at least one third battery pack (130) comprises a plurality of electrochemical battery cells which are stacked one after the other in the longitudinal direction (L) or in the width direction (W).

Example 10: The battery pack assembly (100) according to any one of Examples 8 or 9, wherein the at least one first battery pack (110) comprises at least one first crossbeam member (112) with an extension in the width direction (W), wherein the at least one first crossbeam member (112) is attached to the upper platform support plate (2) by one or more third fasteners (1121).

Example 11: The battery pack assembly (100) according to Example 10, wherein the at least one first crossbeam member (112) is attached to a first bottom support plate (114) of the at least one first battery pack (110) and the at least one first bottom support plate (114) is attached to the lower platform support plate (3) by one or more fourth fasteners (1122).

Example 12: The battery pack assembly (100) according to any one of Examples 8-11, further comprising at least one longitudinally extending lower beam member (9) which is located in the first space (S1) and attached to the lower platform support plate (3) and the upper platform support plate (2), and preferably located midway between the first and second outer lateral ends (E1, E2).

Example 13: A vehicle (200) comprising a vehicle frame (210) which extends along a longitudinal direction (L) of the vehicle (200), wherein the vehicle frame (210) comprises:
- a first and a second longitudinally extending beam member (220, 230) which are offset from each other in a transverse direction (W) of the vehicle (200) and which extend in the longitudinal direction (L) between a front portion (F) and a rear portion (R) of the vehicle (200), and
- a battery pack assembly (100) according to any one of Examples 8-12, wherein the longitudinal direction (L) of the battery pack assembly (100) and the battery pack mounting assembly (1) corresponds to the longitudinal direction (L) of the vehicle (200), and wherein the at least one first fixation bracket (4) is attached to the first longitudinally extending beam member (220) via the first beam member fixation point (41) and the at least one second fixation bracket (5) is attached to the second longitudinally extending beam member (230) via the second beam member fixation point (51).

Example 14: The vehicle (200) according to Example 13, wherein the battery pack mounting assembly (1) comprises at least one first attachment element (8) and/or at least one second attachment element (8) according to Example 4, and
wherein the at least one first attachment element (8) is attached to the first longitudinally extending beam member (220) and/or wherein the at least one second attachment element (8) is attached to the second longitudinally extending beam member (230).

Example 15: The vehicle (200) according to Example 14, wherein the battery pack assembly (100) is arranged to the vehicle (200) such that there is a gap (G) between the upper platform support plate (2) and a respective lower end of the first and second longitudinally extending beam members (220, 230), as seen in the height direction (H).

Example 16: A method for mounting a battery pack assembly (100) according to any one of Examples 8-12 to a vehicle (200), the vehicle (200) comprising a vehicle frame (210) which extends along a longitudinal direction (L) of the vehicle (200), wherein the vehicle frame (210) comprises:
- a first and a second longitudinally extending beam member (220, 230) which are offset from each other in a transverse direction (W) of the vehicle (200) and which extend in the longitudinal direction (L) between a front portion (F) and a rear portion (R) of the vehicle (200), the method comprising:
- attaching the battery pack assembly (100) to the first and second longitudinally extending beam members (220, 230).

Example 17: The method according to Example 16, wherein attaching the battery pack assembly (100) to the first and second longitudinally extending beam members (220, 230) comprises:
- attaching the at least one first fixation bracket (4) to the first longitudinally extending beam member (220) and the at least one second fixation bracket (5) to the second longitudinally extending beam member (230),
- obtaining a pre-assembled object (140) comprising the upper platform support plate (2), the lower platform support plate (3) and the at least one first battery pack (110), wherein the upper platform support plate (2) of the pre-assembled object (140) is attached to the lower platform support plate (2) via the at least one first battery pack (110),
- attaching the preassembled object (140) to the vehicle (200), such as by the at least one first and/or second attachment element (8) according to Example 4.

Example 18: The method according to Example 16 or 17, further comprising:
- inserting the at least one second battery pack (120) into the second space (S2),
- inserting the at least one third battery pack (130) into the third space (S3).

Example 19: The method according to any one of Examples 16-18, further comprising:
- inserting at least one additional first battery pack (110) into the first space (S1).

Example 20: The method according to any one of Examples 16-18, further comprising:
- attaching the first crash protection member (6) to the at least one first fixation bracket (4) via the first crash protection fixation point (42), to the upper platform support plate (2) and to the lower platform support plate (3), and/or attaching the second crash protection member (7) to the at least one second fixation bracket (5) via the second crash protection fixation point (52), to the upper platform support plate (2) and to the lower platform support plate (3).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack mounting assembly (1) for a vehicle (200), the battery pack mounting assembly (1) having a longitudinal extension along a longitudinal direction (L), a width extension along a width direction (W) and a height extension along a height direction (H), the battery pack mounting assembly (1) comprising:
- an upper platform support plate (2),
- a lower platform support plate (3),
wherein the lower platform support plate (3) is provided below the upper platform support plate (2), as seen in the height direction (H), such that a first space (S 1) for at least one battery pack (110) is formed therebetween,
- at least one first fixation bracket (4), provided above the upper platform support plate (2), as seen in the height direction (H), and extending outwardly in the width direction (W) from a first beam member fixation point (41) to a first crash protection fixation point (42) at a first outer lateral end (E1) such that a second space (S2) for at least one battery pack (120) is formed between the upper platform support plate (2) and the at least one first fixation bracket (4),
- at least one second fixation bracket (5), provided above the upper platform support plate (2), as seen in the height direction (H), and extending outwardly in the width direction (W) from a second beam member fixation point (51) to a second crash protection fixation point (52) at a second outer lateral end (E2) such that a third space (S3) for at least one battery pack (130) is formed between the upper platform support plate (2) and the at least one second fixation bracket (5),
wherein the first and second beam member fixation points (41, 51) are offset from each other in the width direction (W) such that a fourth space (S4) is provided in-between the second and third spaces (S2, S3), as seen in the width direction (W), and above the first space (S1), as seen in the height direction (H),
- a first crash protection member (6), provided at the first outer lateral end (E1), as seen in the width direction (W),
- a second crash protection member (7), provided at the second outer lateral end (E2), as seen in the width direction (W),
wherein the first crash protection member (6) is attached to the at least one first fixation bracket (4) via the first crash protection fixation point (42), to the upper platform support plate (2) and to the lower platform support plate (3), and/or wherein the second crash protection member (7) is attached to the at least one second fixation bracket (5) via the second crash protection fixation point (52), to the upper platform support plate (2) and to the lower platform support plate (3).

2. The battery pack mounting assembly (1) according to claim 1, wherein the battery pack mounting assembly (1) is configured such that a load exerted on the lower platform support plate (3) is transferable to the upper platform support plate (2) and/or to the at least one first and second fixation brackets (4, 5) via the first and second crash protection members (6, 7).

3. The battery pack mounting assembly (1) according to any one of the preceding claims, wherein the battery pack mounting assembly (1) is configured such that a load exerted on the upper platform support plate (2) is transferable to the at least one first and second fixation brackets (4, 5) via the first and second crash protection members (6, 7).

4. The battery pack mounting assembly (1) according to any one of the preceding claims, further comprising:
- at least one first attachment element (8) provided in the second space (S2), wherein the at least one first attachment element (8) is attached to the upper platform support plate (2) and arranged to be attachable to a first longitudinally extending beam member (220) of the vehicle (200) in the fourth space (S4), and/or
- at least one second attachment element (8) provided in the third space (S3), wherein the at least one second attachment element (8) is attached to the upper platform support plate (2) and arranged to be attachable to a second longitudinally extending beam member (230) of the vehicle (200) in the fourth space (S4).

5. The battery pack mounting assembly (1) according to any one of the preceding claims, comprising a plurality of first fixation brackets (4), distributed offset from each other in the longitudinal direction (L), and/or comprising a plurality of second fixation brackets (5), distributed offset from each other in the longitudinal direction (L).

6. A battery pack assembly (100) comprising a battery pack mounting assembly (1) according to any one of the preceding claims, and further comprising at least one first battery pack (110) located in the first space (S1), at least one second battery pack (120) located in the second space (S2), and/or at least one third battery pack (130) located in the third space (S3).

7. The battery pack assembly (100) according to claim 6, wherein the at least one first battery pack (110), the at least one second battery pack (120), and/or the at least one third battery pack (130) comprises a plurality of electrochemical battery cells which are stacked one after the other in the longitudinal direction (L) or in the width direction (W).

8. The battery pack assembly (100) according to any one of claims 6 or 7, wherein the at least one first battery pack (110) comprises at least one first crossbeam member (112) with an extension in the width direction (W), wherein the at least one first crossbeam member (112) is attached to the upper platform support plate (2) by one or more third fasteners (1121).

9. The battery pack assembly (100) according to claim 8, wherein the at least one first crossbeam member (112) is attached to a first bottom support plate (114) of the at least one first battery pack (110) and the at least one first bottom support plate (114) is attached to the lower platform support plate (3) by one or more fourth fasteners (1122).

10. The battery pack assembly (100) according to any one of claims 6-9, further comprising at least one longitudinally extending lower beam member (9) which is located in the first space (S1) and attached to the lower platform support plate (3) and the upper platform support plate (2), and preferably located midway between the first and second outer lateral ends (E1, E2).

11. A vehicle (200) comprising a vehicle frame (210) which extends along a longitudinal direction (L) of the vehicle (200), wherein the vehicle frame (210) comprises:
- a first and a second longitudinally extending beam member (220, 230) which are offset from each other in a transverse direction (W) of the vehicle (200) and which extend in the longitudinal direction (L) between a front portion (F) and a rear portion (R) of the vehicle (200), and
- a battery pack assembly (100) according to any one of claims 6-10, wherein the longitudinal direction (L) of the battery pack assembly (100) and the battery pack mounting assembly (1) corresponds to the longitudinal direction (L) of the vehicle (200), and wherein the at least one first fixation bracket (4) is attached to the first longitudinally extending beam member (220) via the first beam member fixation point (41) and the at least one second fixation bracket (5) is attached to the second longitudinally extending beam member (230) via the second beam member fixation point (51).

12. The vehicle (200) according to claim 11, wherein the battery pack mounting assembly (1) comprises at least one first attachment element (8) and/or at least one second attachment element (8) according to claim 4, and
wherein the at least one first attachment element (8) is attached to the first longitudinally extending beam member (220) and/or wherein the at least one second attachment element (8) is attached to the second longitudinally extending beam member (230).

13. The vehicle (200) according to claim 12, wherein the battery pack assembly (100) is arranged to the vehicle (200) such that there is a gap (G) between the upper platform support plate (2) and a respective lower end of the first and second longitudinally extending beam members (220, 230), as seen in the height direction (H).

14. A method for mounting a battery pack assembly (100) according to any one of claims 6-10 to a vehicle (200), the vehicle (200) comprising a vehicle frame (210) which extends along a longitudinal direction (L) of the vehicle (200), wherein the vehicle frame (210) comprises:
- a first and a second longitudinally extending beam member (220, 230) which are offset from each other in a transverse direction (W) of the vehicle (200) and which extend in the longitudinal direction (L) between a front portion (F) and a rear portion (R) of the vehicle (200), the method comprising:
- attaching the battery pack assembly (100) to the first and second longitudinally extending beam members (220, 230).

15. The method according to claim 14, wherein attaching the battery pack assembly (100) to the first and second longitudinally extending beam members (220, 230) comprises:
- attaching the at least one first fixation bracket (4) to the first longitudinally extending beam member (220) and the at least one second fixation bracket (5) to the second longitudinally extending beam member (230),
- obtaining a pre-assembled object (140) comprising the upper platform support plate (2), the lower platform support plate (3) and the at least one first battery pack (110), wherein the upper platform support plate (2) of the pre-assembled object (140) is attached to the lower platform support plate (2) via the at least one first battery pack (110),
- attaching the preassembled object (140) to the vehicle (200), such as by the at least one first and/or second attachment element (8) according to claim 4.
